# EUROPEAN PATENT SPECIFICATION

(11) **EP 2 482 165 B1**
(45) Date of publication and mention of the grant of the patent: **11.03.2020**
(21) Application number: 12151234.7
(22) Date of filing: 16.01.2012
(51) Int. Cl.: G06F 1/16

(54) **Tablet electronic device**
Elektronische Tafelanordnung
Dispositif électronique à tablette

(30) Priority: 28.01.2011 US 201161437009 P
(43) Date of publication of application: 01.08.2012
(73) Proprietor: ASUSTeK Computer Inc., Taipei City 112 (TW)
(72) Inventor: Hsu, Ming-Fang, 112 Taipei City (TW); Hsieh, Ming-Chih, Taipei (TW); Ke, Lian-Tien, 112 Taipei City (TW)
(74) Representative: Becker & Kurig Partnerschaft Patentanwälte PartmbB

(56) References cited:
- US-A1- 2003 126 335
- US-A1- 2006 238 497
- US-A1- 2009 146 909
- US-A1- 2009 300 251

## Description

### BACKGROUND OF THE INVENTION

### Field of the Invention

The invention relates to an electronic device and, more particularly, to a tablet electronic device configured to electrically connect to a portable electronic device.

### Description of the Related Art

A smart phone can be used to browse websites and edit documents except the communication function. The smart phone is portable and smaller than other handheld electronic devices. However, the size of its screen is also limited, which is difficult for the user to operate with.

If the user needs a handheld device with a larger screen, a tablet computer is available. However, most of the tablet computers do not include a communication module, and the size of the tablet computer is larger than the smart phone so as to occupy more space and is not convenient for portability.

Furthermore, since the operation systems of various handheld electronic devices are different, when the user transmits data between the handheld electronic devices, the handheld electronic devices may be not compatible with each other.

US 20060238497 A1 discloses an auxiliary computing device. A computer system includes a first computing device with a microprocessor configured for operating computer-executable instructions. The first computing device may include a main body with a receiving portion. An auxiliary computer device may be removably coupled to the first computing device and received in the receiving portion. An auxiliary computing device serves a detachable display for a main computing system.

US 2003/126335 A1 discloses a notebook computer including a docking port to receive a core computer. The processor of the core computer serves as the system processor for the notebook computer when the core computer is docked in the notebook computer. When the core computer is undocked, the processor serves as the system processor for the core computer. The processor of the core computer may operate at a lower voltage and at a lower frequency when serving as the system processor for the core computer.

US 2009/300251 A1 discloses a computer equipment including a primary body and a secondary body. The primary body includes a primary host for performing computer operations independently and a primary monitor for displaying the computer operations. The secondary body includes a secondary host for performing computer operations independently and a touch monitor for displaying the computer operations. A user can use the primary body as an expansion dock of the secondary body, such that the primary monitor is switched to display an operation status of the secondary host.

US 2009/0146909 A1 discloses a tablet device including a display assembly having a first viewing portion and a second viewing portion and a docking station that removably docks a portable device having an imaging apparatus and an image capture apparatus. The tablet device is configured to set the second viewing portion transparent to allow the image capture apparatus of the portable device to capture an image through the second viewing portion of the display assembly when the portable device is docked in the tablet device.

### BRIEF SUMMARY OF THE INVENTION

The present invention is provided by appended claim 1. Beneficial embodiments are provided in the depended claims. Accordingly, the following disclosure provides a tablet electronic device configured to electrically connect to a portable electronic device. The user can operate the portable electronic device conveniently via the tablet electronic device.

A tablet electronic device is configured to electrically connect to a portable electronic device. The electrical connection or a data exchange may be a physical or unphysical electrical connection.

The portable electronic device includes a first connecting interface and a processing module. The tablet electronic device includes a body and a touch panel. The body includes a second connecting interface connected to the first connecting interface. The touch panel is disposed in the body and generates a touch signal after a touch. When the portable electronic device is connected to the tablet electronic device, the touch panel displays information of the portable electronic device. The touch signal is transmitted to the first connecting interface via the second connecting interface. After the touch signal is processed by the processing module, the processing module generates output information and transmits it to the second connecting interface via the first connecting interface, and the output information is displayed at the touch panel.

As stated above, the portable electronic device can be operated via the touch panel of the tablet electronic device. Since the tablet electronic device utilize the processor of the portable electronic device, no processing module is required in the tablet electronic device, which decreases manufacture cost. Moreover, no matter the portable electronic device is used by users directly, or the information of the portable electronic device is read via the tablet electronic device, the operation system of the portable electronic device can be utilized in any conditions, which avoids the troublesome in data conversion between different operation systems.

These and other features, aspects and advantages of the present invention will become better understood with regard to the following description, appended claims, and accompanying drawings.

### BRIEF DESCRIPTION OF THE DRAWINGS

FIG. 1A is a back view showing a tablet electronic device and a portable electronic device in a first embodiment;
FIG. 1B is a back view showing that the tablet electronic device in FIG. 1A is connected to the portable electronic device;
FIG. 1C is a front view showing that the tablet electronic device in FIG. 1A is connected to the portable electronic device;
FIG. 2 is a front view showing that a tablet electronic device is connected to a portable electronic device in a second embodiment;
FIG. 3 is a back view showing that a tablet electronic device is connected to a portable electronic device in a third embodiment;
FIG. 4A and FIG. 4B are back view showing a tablet electronic device in a fourth embodiment;
FIG. 4C is a back view showing the tablet electronic device and the portable electronic device in FIG. 4A;
FIG. 4D to FIG. 4E are back view showing that the tablet electronic device in FIG. 4A is connected to the portable electronic device;
FIG. 5 is a back view showing that a tablet electronic device is connected to a portable electronic device in a fifth embodiment;
FIG. 6 is a back view showing that a tablet electronic device is wirelessly connected to a portable electronic device in a sixth embodiment;
FIG. 7 is a back view showing that a tablet electronic device is connected to a portable electronic device in a seventh embodiment; and
FIG. 8 is a back view showing that a tablet electronic device is connected to a portable electronic device in an eighth embodiment.

### DETAILED DESCRIPTION OF THE EMBODIMENTS

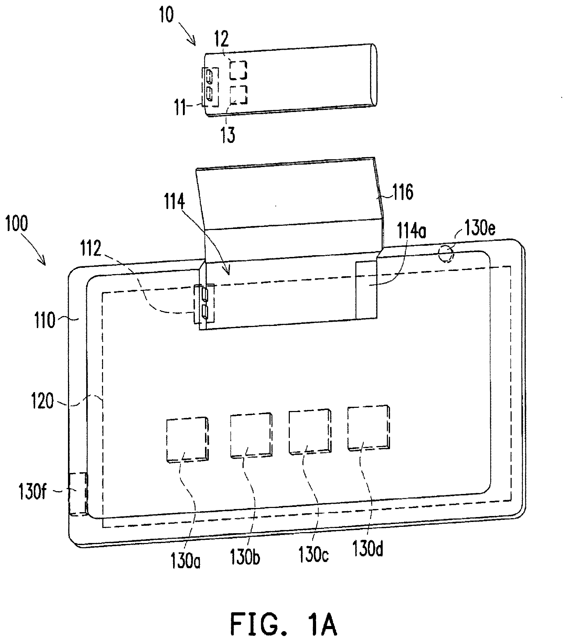

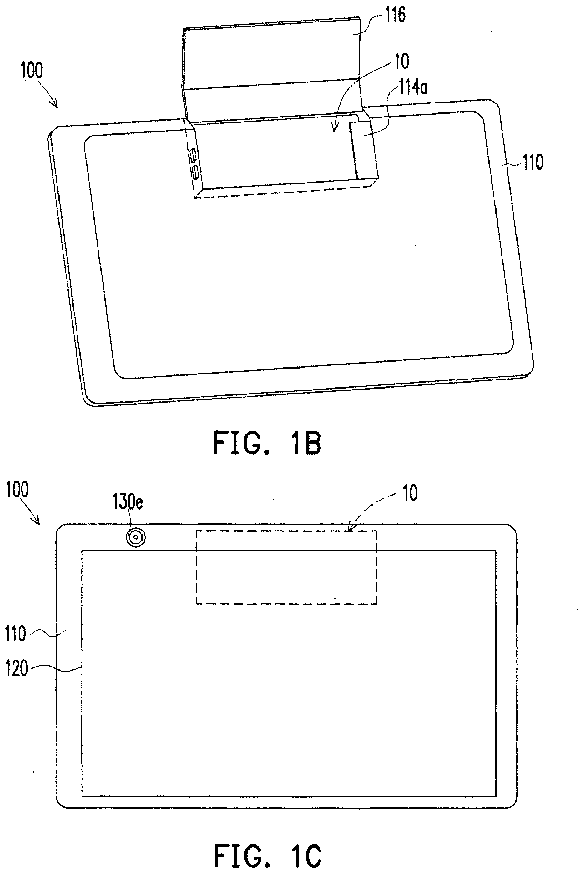

FIG. 1A is a back view showing a tablet electronic device and a portable electronic device in a first embodiment. FIG. 1B is a back view showing that the tablet electronic device in FIG. 1A is connected to the portable electronic device. FIG. 1C is a front view showing that the tablet electronic device in FIG. 1A is connected to the portable electronic device.

In FIG. 1A to FIG. 1C, the tablet electronic device 100 is electrically connected to the portable electronic device 10, and the electrical connection or data exchange may be a physical or unphysical, which is not limited herein. The portable electronic device 10 includes a first connecting interface 11, a processing module 12 and an image modulating module 13. The portable electronic device 10 may be a mobile phone, which is not limited herein.

The tablet electronic device 100 includes a body 110, a touch panel 120, a power source module 130a, a loudspeaker module 130b, a radio module 130c, an antenna module 130d, a lens 130e and an extension interface 130f. The components of the tablet electronic device 100 are just for examples and can be adjusted according to requirements, which is not limited herein.

The body 110 includes a second connecting interface 112 connected to the first connecting interface 11. The touch panel 120 is disposed in the body 110 and generates a touch signal while being touched thereon. When the portable electronic device 10 is connected to the tablet electronic device 100, the touch panel 120 displays the information of the portable electronic device 10.

The touch signal is transmitted to the first connecting interface 11 via the second connecting interface 112 and processed by the processing module 12. Then, the processing module 12 generates output information, and the output information is transmitted to the second connecting interface 112 via the first connecting interface 11 and is displayed at the touch panel 120.

The body 110 includes an accommodating recess 114 and a protection cover 116, and the protection cover 116 movably covers the accommodating recess 114. When the portable electronic device 10 is accommodated in the accommodating recess 114, the protection cover 116 covers the portable electronic device 10 to keep a consistent outlook of the tablet electronic device 100. However, the protection cover 116 may be omitted.

The accommodating recess 114 may include a sliding runner 114a disposed in the accommodating recess 114. When the portable electronic device 10 is disposed in the tablet electronic device 100 along the sliding runner 114a, the first connecting interface 11 is connected to the second connecting interface 112.

The first connecting interface 11 and the second connecting interface 112 may be physical connecting ports, such as a micro universal serial bus (Micro USB) or a micro high definition multimedia interface (Micro HDMI). The portable electronic device 10 and the tablet electronic device 100 are electrically connected and transmit signals to each other via the micro USB and the micro HDMI.

In an embodiment, the tablet electronic device 100 does not include a central processing unit (CPU) or a graphic processing unit (GPU). When the first connecting interface 11 of the portable electronic device 10 is connected to the second connecting interface 112 of the tablet electronic device 100, the signals of the portable electronic device 10 can be transmitted to the tablet electronic device 100. Moreover, the touch panel 120 is larger than the screen of the portable electronic device 10, and thus it is convenient for the user to operate the portable electronic device 10 via the touch panel 120.

Furthermore, before the output information, such as image information, of the portable electronic device 10 is transmitted to the tablet electronic device 100, the image modulating module 13 adjusts the definition of the image information to fit the touch panel 120. Then the adjusted image information is transmitted to the second connecting interface 112 of the tablet electrical device 100 via the first connecting interface 11 and displayed at the touch panel 120.

The power source module 130a is disposed in the body 110 and is electrically connected to the second connecting interface 112 and the touch panel 120. When the portable electronic device 10 is connected to the tablet electronic device 100, the power source module 130a may charge the portable electronic device 10 according to requirements.

The loudspeaker module 130b is disposed in the body 110 and is electrically connected to the second connecting interface 112 and the power source module 130a. When the portable electronic device 10 is electrically connected to the tablet electronic device 100, a sound signal of the portable electronic device 10 can be transmitted to the tablet electronic device 100 and played by the loudspeaker module 130b.

The radio module 130c is disposed in the body 110 and is electrically connected to the second connecting interface 112 and the power source module 130a. When the portable electronic device 10 is electrically connected to the tablet electronic device 100, the sound signal received by the radio module 130c is transmitted to the portable electronic device 10 for processing.

The antenna module 130d is disposed in the body 110 and is electrically connected to the second connecting interface 112 and the power source module 130a. When the portable electronic device 10 is electrically connected to the tablet electronic device 100, the antenna module 130d can strengthen the signal of the communication module in the portable electronic device 10.

The lens 130e is disposed in the body 110 and is electrically connected to the second connecting interface 112 and the power source module 130a. When the portable electronic device 10 is electrically connected to the tablet electronic device 100, the image information captured by the lens 130e is transmitted to the processing module 12, and after processing, the processing module 12 generates the output information and transmits it to the touch panel 120 for displaying.

The extension interface 130f is disposed in the body 110 and is electrically connected to the second connecting interface 112 and the power source module 130a. The extension interface 130f may be a USB, which is not limited herein. An external memory device can be connected to the portable electronic device 10 via the extension interface 130f of the tablet electronic device 100.

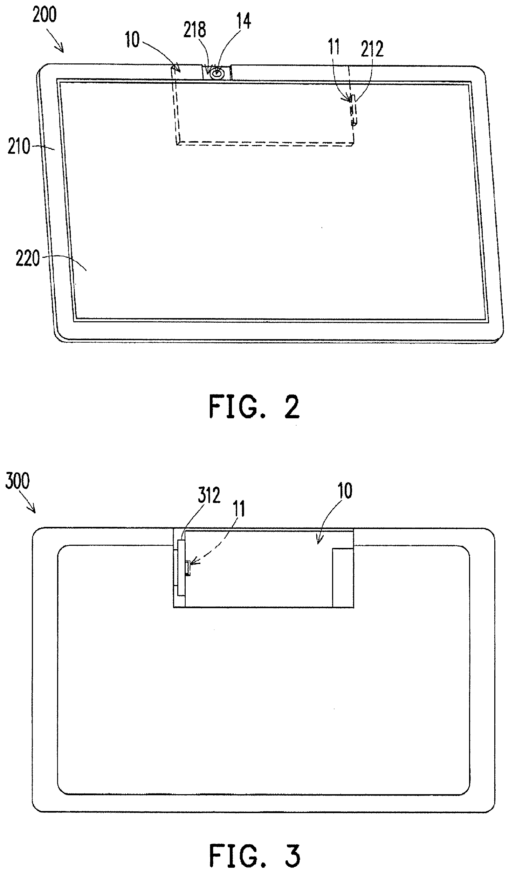

FIG. 2 is a front view showing that a tablet electronic device is connected to a portable electronic device in a second embodiment. The portable electronic device 10 further includes a lens 14, and the body 210 of the tablet electronic device 200 includes a through hole 218. When the first connecting interface 11 is connected to the second connecting interface 212, the position of the lens 14 corresponds to the position of the through hole 218 to expose the lens 14 from the tablet electronic device 200.

As shown in FIG. 2, the tablet electronic device 200 uses the lens 14 of the portable electronic device 10 to capture images, and the captured images can be transmitted to the touch panel 220 for displaying via the first connecting interface 11 and the second connecting interface 212. Thus, the tablet electronic device 200 does not need to include a lens, and the manufacture cost is decreased.

FIG. 3 is a back view showing that a tablet electronic device is connected to a portable electronic device in a third embodiment. The second connecting interface 312 is detachably connected to the body 310. The second connecting interface 312 is an adapter and includes interfaces corresponding to the tablet electronic device 100 and the first connecting interface 11, respectively.

Since different portable electronic devices include different first connecting interfaces, the portable electronic device 10 can be electrically connected to the tablet electronic device 300 via an appropriate second connecting interface 312. Thus, the tablet electronic device 300 can be applied to more types of portable electronic devices.

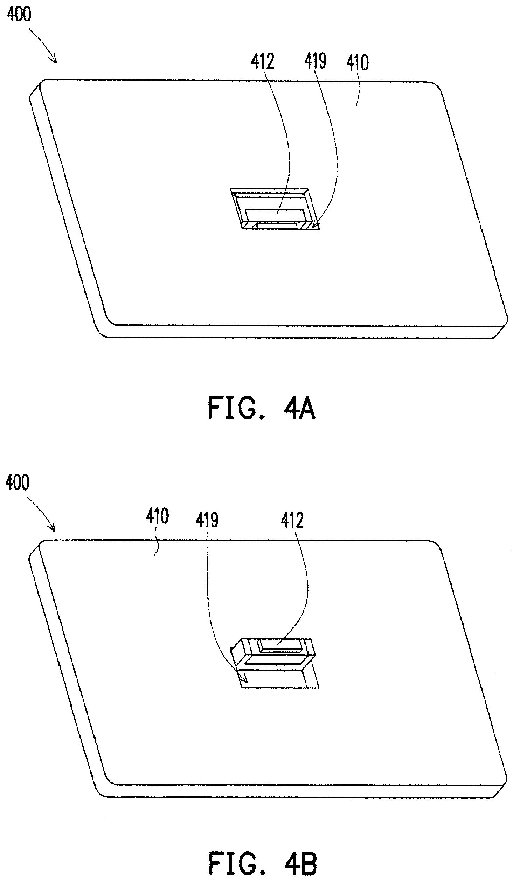

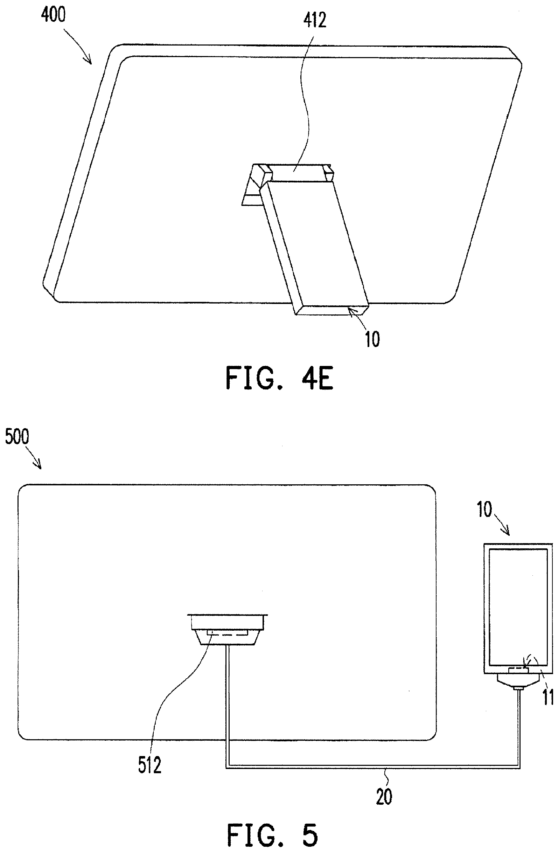

FIG. 4A and FIG. 4B are back view showing a tablet electronic device in a fourth embodiment. The second connecting interface 412 is pivotally connected to the body 410, and it can rotate relative to the body 410. The body 410 includes a recess 419, and the second connecting interface 412 is at the recess 419. As shown in FIG. 4A, when the portable electronic device 10 is not connected to the tablet electronic device 400, the second connecting interface 412 is hidden in the recess 419. To connect the portable electronic device 10 to the tablet electronic device 400, the second connecting interface 412 is rotated outwards (as shown in FIG. 4B).

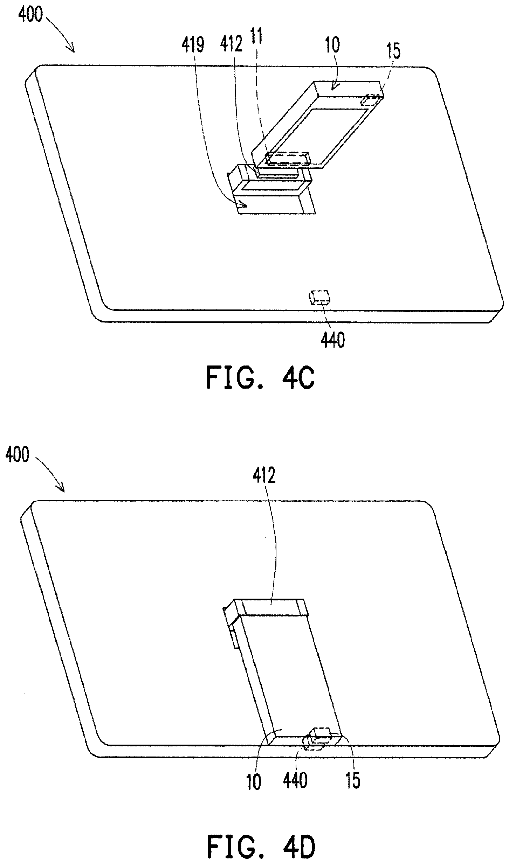

FIG. 4C is a back view showing the tablet electronic device and the portable electronic device in FIG. 4A. The second connecting interface 412 is exposed from the recess 419, and the first connecting interface 11 of the portable electronic device 10 is directly connected to the second connecting interface 412.

FIG. 4D to FIG. 4E are back view showing that the tablet electronic device in FIG. 4A is connected to the portable electronic device. Since the second connecting interface 412 can rotate relative to the body 410, the portable electronic device 10 connected to the second connecting interface 412 can also rotate relative to the body 410 and be used as a support for the tablet electronic device 400.

Moreover, the portable electronic device 10 further includes a first magnetic element 15, and the tablet electronic device 400 further includes a second magnetic element 440. When the portable electronic device 10 is not used as the support, the portable electronic device 10 flatly faces to the tablet electronic device 400 (as shown in FIG. 4D). The first magnetic element 15 of the portable electronic device 10 attaches to the second magnetic element 440 of the tablet electronic device 400 to make the portable electronic device 10 contemporarily fixed at the tablet electronic device 400.

When the user uses the portable electronic device 10 to support the tablet electronic device 400, he or she only needs to apply force to separate the portable electronic device 10 and the tablet electronic device 400.

FIG. 5 is a back view showing that a tablet electronic device is connected to a portable electronic device in a fifth embodiment. In the tablet electronic device 500, the first connecting interface 11 is connected to the second connecting interface 512 via a transmission line 20, and the first connecting interface 11 and the second connecting interface 512 may be the same or different transmission interfaces. As shown in FIG. 5, the portable electronic device 10 is outside the tablet electronic device 500.

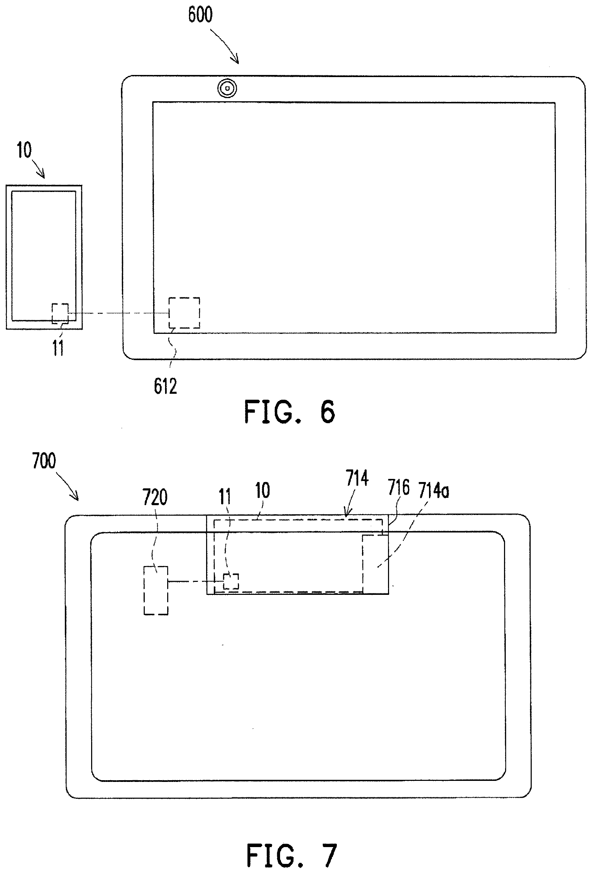

FIG. 6 is a back view showing that a tablet electronic device is wirelessly connected to a portable electronic device in a sixth embodiment. The first connecting interface 11 and the second connecting interface 612 may be unphysical connecting interfaces. For example, the tablet electronic device 600 and the portable electronic device 10 transmit the signal to each other via a wireless transmission module. As shown in FIG. 6, the portable electronic device 10 does not contact with the tablet electronic device 600.

FIG. 7 is a back view showing that a tablet electronic device is connected to a portable electronic device in a seventh embodiment. The difference between the seventh embodiment and the sixth embodiment is that the body of the tablet electronic device 700 includes an accommodating recess 714 and a protection cover 716.

The tablet electronic device 700 uses the accommodating recess 714 to accommodate the portable electronic device 10 and uses the protection cover 716 to cover the portable electronic device 10, which can prevent external objects from entering the tablet electronic device 700 and keep a consistent outlook. Furthermore, it is convenient to carry the portable electronic device 10 and the tablet electronic device 700.

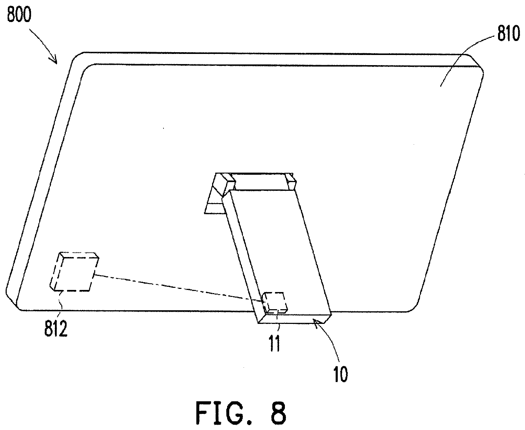

FIG. 8 is a back view showing that a tablet electronic device is connected to a portable electronic device in an eighth embodiment. The difference between the eighth embodiment and the sixth embodiment is that the portable electronic device 10 is pivotally connected to the body 810 and can rotate relative to the body 810. Thus, the portable electronic device 10 can be used as a support for the tablet electronic device 800.

In sum, the touch panel, in a bigger size, of the tablet electronic device is used to operate the portable electronic device, so as to provide a more comfortable operation interface for the user. Moreover, since the portable electronic device is used to process information, the tablet electronic device does not need to include a processing module, which can decrease the manufacture cost and avoid the data conversion problem due to different operation systems.

Although the present invention has been described in considerable detail with reference to certain preferred embodiments thereof, the disclosure is not for limiting the scope. Persons having ordinary skill in the art may make various modifications and changes without departing from the scope. It is intended that the scope of the present invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. Th e invention is limited only by the scope of the appended claims.

## Claims

1. A tablet electronic device (200) configured to electrically connect to a portable electronic device (10) having a first connecting interface (11), a processing module (12), an image modulating module (13) and a camera lens (14), the tablet electronic device (200) comprising:
a body (210) including a second connecting interface (212) configured to connect the first connecting interface (11), and a touch panel (120) disposed on the body (110), the tablet electronic device (200) **characterised in that**: the body (210) further includes a through hole (218), and when the first connecting interface (11) is connected to the second connecting interface (212), the through hole (218) exposes the camera lens (14) of the portable electronic device (10) to enable images to be captured by the camera lens (14) with the use of the through hole (218); and
wherein the tablet electronic device (200) does not include processing module therein, such that when the portable electronic device (10) is connected to the tablet electronic device (200), a touch signal is generated and then transmitted to the first connecting interface (11) via the second connecting interface (212), and after the touch signal is processed by the processing module (12) of the portable electronic device (10), the processing module (12) of the portable electronic device (10) generates output information and transmits the output information to the second connecting interface (212) via the first connecting interface (1 1), and the output information of the portable electronic device (10) is displayed at the touch panel (220).

2. The tablet electronic device (200) according to claim 1, wherein the body (210) includes an accommodating recess (114) for accommodating the portable electronic device (10).

3. The tablet electronic device (200) according to claim 2, wherein the accommodating recess (114) includes a sliding runner (114a), and the portable electronic device (10) is disposed in the tablet electronic device (200) along the sliding runner (114a).

4. The tablet electronic device (200) according to claim 2, wherein the body (210) includes a protection cover (116) for covering the accommodating recess (114).

5. The tablet electronic device (300) according to claim 1, wherein the second connecting interface (312) is detachably connected to the body (310).

6. The tablet electronic device (400) according to claim 1, wherein the second connecting interface (412) is pivotally connected to the body (410).

7. The tablet electronic device (600) according to claim 1, wherein the tablet electronic device (600) further includes a wireless transmission module.

## Patentansprüche

1. Tablet-Elektronikvorrichtung (200), die konfiguriert ist, zum elektrischen Verbinden mit einer tragbaren Elektronikvorrichtung (10), die eine erste Verbindungsschnittstelle (11), ein Verarbeitungsmodul (12), ein Bildmodulationsmodul (13) und eine Kameralinse (14) aufweist, wobei die Tablet-Elektronikvorrichtung (200) umfasst:
einen Körper (210), der eine zweite Verbindungsschnittstelle (212), die konfiguriert ist, um die erste Verbindungsschnittstelle (11) zu verbinden, und ein Bildschirm-Tastfeld (120) beinhaltet, das auf dem Körper (110) angeordnet ist, wobei die Tablet-Elektronikvorrichtung (200) **dadurch gekennzeichnet ist, dass**: der Körper (210) weiterhin ein Durchgangsloch (218) beinhaltet, und wenn die erste Verbindungsschnittstelle (11) mit der zweiten Verbindungsschnittstelle (212) verbunden ist, das Durchgangsloch (218) die Kameralinse (14) der tragbaren Elektronikvorrichtung (10) freilegt, um Bilder zu ermöglichen von der Kameralinse (14) unter Verwendung des Durchgangslochs (218) aufgenommen zu werden; und,
wobei die Tablet-Elektronikvorrichtung (200) kein Verarbeitungsmodul darin beinhaltet, so dass, wenn die tragbare Elektronikvorrichtung (10) mit der Tablet-Elektronikvorrichtung (200) verbunden ist, ein Berührungssignal erzeugt wird und dann über die zweite Verbindungsschnittstelle (212) an die erste Verbindungsschnittstelle (11) übertragen wird, und nachdem das Berührungssignal durch das Verarbeitungsmodul (12) der tragbaren Elektronikvorrichtung (10) verarbeitet ist, erzeugt das Verarbeitungsmodul (12) der tragbaren Elektronikvorrichtung (10) Ausgangsinformationen und überträgt die Ausgangsinformationen über die erste Verbindungsschnittstelle (11) an die zweite Verbindungsschnittstelle (212), und die Ausgangsinformationen der tragbaren Elektronikvorrichtung (10) werden auf dem Bildschirm-Tastfeld (220) angezeigt.

2. Tablet-Elektronikvorrichtung (200) gemäß Anspruch 1, wobei der Körper (210) eine Aufnahmeaussparung (114) zum Aufnehmen der tragbaren Elektronikvorrichtung (10) beinhaltet.

3. Tablet-Elektronikvorrichtung (200) gemäß Anspruch 2, wobei die Aufnahmeaussparung (114) eine Gleitschiene (114a) aufweist, und die tragbare Elektronikvorrichtung (10) in der Tablet-Elektronikvorrichtung (200) entlang der Gleitschiene (114a) angeordnet ist.

4. Tablet-Elektronikvorrichtung (200) gemäß Anspruch 2, wobei der Körper (210) eine Schutzabdeckung (116) zum Abdecken der Aufnahmeaussparung (114) beinhaltet.

5. Tablet-Elektronikvorrichtung (300) gemäß Anspruch 1, wobei die zweite Verbindungsschnittstelle (312) lösbar mit dem Körper (310) verbunden ist.

6. Tablet-Elektronikvorrichtung (400) gemäß Anspruch 1, wobei die zweite Verbindungsschnittstelle (412) schwenkbar mit dem Körper (410) verbunden ist.

7. Tablet-Elektronikvorrichtung (600) gemäß Anspruch 1, wobei die Tablet-Elektronikvorrichtung (600) weiterhin ein drahtloses Übertragungsmodul beinhaltet.

## Revendications

1. Dispositif électronique de type tablette (200) configuré pour la connexion électrique à un dispositif électronique portable (10) ayant une première interface de connexion (11), un module de traitement (12), un module de modulation d'image (13) et un objectif de caméra (14), le dispositif électronique de type tablette (200) comprenant :
un corps (210) comprenant une deuxième interface de connexion (212) configurée pour la connexion avec la première interface de connexion (11), et un écran tactile (120) disposé sur le corps (110), le dispositif électronique de type tablette (200) étant **caractérisé en ce que** :
le corps (210) comprend en outre un trou traversant (218), et lorsque la première interface de connexion (11) est connectée à la deuxième interface de connexion (212), le trou traversant (218) expose l'objectif de caméra (14) du dispositif électronique portable (10) pour permettre la capture d'images par l'objectif de caméra (14) avec l'utilisation du trou traversant (218) ; et
dans lequel le dispositif électronique de type tablette (200) ne comprend pas de module de traitement dans celui-ci, de sorte que lorsque le dispositif électronique portable (10) est connecté au dispositif électronique de type tablette (200), un signal d'effleurement est généré et est ensuite transmis à la première interface de connexion (11) via la deuxième interface de connexion (212), et après le traitement du signal d'effleurement par le module de traitement (12) du dispositif électronique portable (10), le module de traitement (12) du dispositif électronique portable (10) génère de l'information de sortie et transmet l'information de sortie à la deuxième interface de connexion (212) via la première interface de connexion (11), et l'information de sortie du dispositif électronique portable (10) est affichée au niveau de l'écran tactile (220).

2. Dispositif électronique de type tablette (200) selon la revendication 1, dans lequel le corps (210) comprend une cavité de logement (114) pour le logement du dispositif électronique portable (10).

3. Dispositif électronique de type tablette (200) selon la revendication 2, dans lequel la cavité de logement (114) comprend un patin coulissant (114a), et le dispositif électronique portable (10) est disposé dans le dispositif électronique de type tablette (200) le long du patin coulissant (114a).

4. Dispositif électronique de type tablette (200) selon la revendication 2, dans lequel le corps (210) comprend un couvercle de protection (116) pour recouvrir la cavité de logement (114).

5. Dispositif électronique de type tablette (300) selon la revendication 1, dans lequel la deuxième interface de connexion (312) est connectée de façon amovible au corps (310).

6. Dispositif électronique de type tablette (400) selon la revendication 1, dans lequel la deuxième interface de connexion (412) est connectée de manière pivotante au corps (410).

7. Dispositif électronique de type tablette (600) selon la revendication 1, dans lequel le dispositif électronique de type tablette (600) comprend en outre un module de transmission sans fil.
